# EUROPÄISCHE PATENTSCHRIFT

(11) **EP 3 312 412 B1**
(45) Veröffentlichungstag und Bekanntmachung des Hinweises auf die Patenterteilung: **28.08.2019**
(21) Anmeldenummer: 17197322.5
(22) Anmeldetag: 19.10.2017
(51) Int. Cl.: F03B 17/06, F03B 11/08

(54) **EINLAUFSCHAUFELN**
INLET BLADES
AUBE D'ENTRÉE

(30) Priorität: 21.10.2016 AT 509612016
(43) Veröffentlichungstag der Anmeldung: 25.04.2018
(73) Patentinhaber: Mondl, Fritz, 2404 Petronell (AT)
(72) Erfinder: Mondl, Fritz, 2404 Petronell (AT)
(74) Vertreter: Babeluk, Michael

(56) Entgegenhaltungen:
- CH-A5- 684 430
- DE-A1-102008 054 361
- US-A- 3 986 787
- US-A1- 2007 096 472
- US-A1- 2015 030 430

## Beschreibung

Die Erfindung betrifft eine Freistrom-Mantelturbine mit einem rohrförmigen Turbinenmantel, einer im Inneren des Turbinenmantels angeordneten Turbine, die einen Generator antreibt, wobei der Turbinenmantel eine durch eine Einlaufkante begrenzte Einströmöffnung, einen Einlauftrichter und einen Diffusor aufweist.

Freistrom-Mantelturbinen, die vom Anmelder als Strombojen am Markt angeboten werden, stellen eine hervorragende Möglichkeit dar, auf umweltschonende Weise Energie aus fließenden Gewässern zu gewinnen. Der besondere Vorteil besteht darin, dass keine Eingriffe in die Natur des Gewässers erforderlich sind, wie dies beispielsweise bei der Errichtung von Staumauern für herkömmliche Kraftwerke der Fall ist. Die Turbinen werden lediglich an einer geeigneten Stelle in ein fließendes Gewässer eingehängt und durchströmt.

Die Konstruktion der Mantelturbine weist zum Schutz der Turbine und zur Strömungsoptimierung einen Turbinenmantel auf, der sich beginnend von einer Einströmöffnung zunächst verjüngt, im Bereich des Turbinenrotors die engste Stelle aufweist und sich danach in Form eines Diffusors wieder erweitert.

Mit solchen Freistrom-Mantelturbinen kann die Bewegungsenergie des durchströmenden Wassers mit stark verbessertem Wirkungsgrad in elektrische Energie umgesetzt werden (siehe z.B. US 2007/0096472 A).

Es ist beispielsweise aus der CH 151 440 A oder der AT 174 030 A bekannt, Francisturbinen mit einer Leitschaufelanordnung auszustatten. Die Anforderungen daran sind prinzipbedingt völlig unterschiedlich zu denen bei Freistrom-Mantelturbinen.

Aufgabe der vorliegenden Erfindung ist es, eine weitere Steigerung des Wirkungsgrads zu erreichen. Wesentliche Bedingungen bei der Konstruktion von Mantelturbinen ist stets, die Möglichkeit einer Beschädigung oder Beeinträchtigung durch Treibgut zu minimieren, und mit ihrer speziellen Ausformung einen möglichst großen Strömungsquerschnitt für die Energieernte zu nutzen. Ein weiterer wesentlicher Aspekt der vorliegenden Erfindung ist die Tatsache, dass der Druckverlust im Inneren der Turbine möglichst gering gehalten werden muss, um eine ausreichende Durchströmung sicherzustellen.

Erfindungsgemäß werden diese Aufgaben dadurch gelöst, dass stromaufwärts der Einströmöffnung ein Leitapparat angebracht ist, der aus mehreren Leitschaufeln besteht, die jeweils eine Vorderkante aufweisen, wobei sich die Vorderkanten der Leitschaufeln im Wesentlichen entlang eines Kegelmantels von einer Spitze bis zur Einlaufkante erstrecken, und dass die Leitschaufeln an ihren stromabwärtigen Seiten einen angestellten Endabschnitt aufweisen. Die Spitze ist der Punkt, in dem die Leitschaufeln zusammentreffen.

Wesentlich ist einerseits, dass die Leitschaufeln treibgutabweisend und selbstreinigend ausgebildet sind. Andererseits wird dadurch, dass die Leitschaufeln an ihrer stromaufwärtigen Seite im Wesentlichen vor der Einlaufkante gelegen sind, der Druckverlust im Inneren der Freistromturbine verringert, so dass Wirkungsgradminderungen zufolge einer äußeren Umströmung minimiert werden können. Besonders wichtig ist es in diesem Zusammenhang darauf zu achten, dass der zusätzliche Strömungswiderstand der Leitschaufeln nicht die positive Wirkung der Strömungsumlenkung in Rotordrehrichtung wieder aufhebt. Denn eine Freistromturbine darf nicht zum Hindernis werden, sonst wird sie von der freien Strömung umströmt, statt durchströmt, und verliert dadurch Leistung.

Durch die erfindungsgemäße Ausführung des Leitapparats ist es möglich, sämtliche Anforderungen zu erfüllen. Aufgrund der Tatsache, dass das anströmende Wasser vor der Turbine einen Drall erhält, kann der Wirkungsgrad deutlich gesteigert werden. Aufgrund der in Bezug auf die Strömungsrichtung geneigten Vorderkante der Leitschaufeln wird erreicht, dass auf die Leitschaufeln auftreffendes Treibgut nach außen über die Einlaufkante abgelenkt wird.

Besonders günstig im Sinn der Ablenkung von Treibgut ist es, wenn sich die Vorderkanten der Leitschaufeln jeweils außen über die Einlaufkante hinweg erstrecken. Dadurch kann insbesondere erreicht werden, dass flexibles Treibgut, das auf eine Leitschaufel auftrifft, entlang der Vorderkante nach außen gleitet und außerhalb und stromabwärts der Einlaufkante freigegeben wird und dadurch keine Verklausung verursachen kann.

Vorzugsweise ist vorgesehen, dass die Leitschaufeln in einem Winkel von maximal 60°, vorzugsweise in einem Winkel zwischen 25° und 45° zu einer Längsachse der Freistromturbine angeordnet sind. Auf diese Weise kann de Strömung des Wassers eine ausreichende Kraft auf allfälliges Treibgut ausüben, um dieses entlang der Leitschaufeln nach außen zu führen.

Eine besonders vorteilhafte konstruktive Ausführung ist dadurch gegeben, dass sich die Leitschaufeln von einem Zentralrohr radial nach außen erstrecken. Damit ist es möglich, über die Leitschaufeln den Generator und die Turbine am Turbinenmantel zu befestigen bzw. zu lagern. Dadurch können die Leitschaufeln auch gleichzeitig zur Fixierung und Stabilisierung der Rotorachse im Zentrum des Turbinenmantels dienen.

Besonders günstig ist es, wenn der angestellte Endabschnitt der Leitschaufeln einstellbar ausgeführt ist. Dadurch kann der Wirkungsgrad optimiert werden. Normalerweise reicht es aus, die Einstellung einmalig auf typische Einsatzbedingungen vorzunehmen. Falls der Aufwand gerechtfertigt ist, kann auch eine laufende Einstellung während des Betriebs vorgesehen werden.

Eine besonders begünstigte Ausführungsvariante der vorliegenden Erfindung sieht vor, dass der angestellte Endabschnitt der Leitschaufeln zumindest teilweise stromabwärts der Einströmöffnung angeordnet ist. Auf diese Weise kann eine Verwirbelung außerhalb der Turbine vermieden werden, wodurch entsprechende Verluste ebenfalls nicht auftreten.

Besonders günstig ist es, wenn stromaufwärts der Leitschaufeln ein Rechen in Form einer Mehrzahl von Seilen angeordnet ist, die von einer Bugkante zur Einlaufkante gespannt sind. Damit wird das Eindringen größerer Fremdkörper verhindert und es hat sich gleichzeitig herausgestellt, dass durch diese Seile auch keine Fische geringerer Größe, die an sich hindurch treten könnten, in die Turbine gelangen, was einen erheblichen Vorteil gegenüber starken Einlaufgittern darstellt. Auch hier ist es besonders günstig, wenn die Seile an der Außenseite der Einlaufkante mithilfe einer Spannvorrichtung mit in spitzem Winkel zur Anströmung geformten treibgutabweisenden Kanten befestigt sind, um anhaftendes Treibgut jeglicher Größe nach außen/hinten abzuweisen.

In der Folge wird die vorliegende Erfindung anhand der in den Figuren dargestellten Ausführungsvarianten näher erläutert. Es zeigen:
- Fig. 1: eine schematische Vorderansicht einer Ausführungsvariante;
- Fig. 2: ein Detail im Längsschnitt, insbesondere jenes Segment vor der Turbine, in dem sich die Leitschaufeln befinden;
- Fig. 3: eine Ansicht des Leitapparates;
- Fig. 4: ein Detail der Seilspannvorichtung im Längsschnitt.

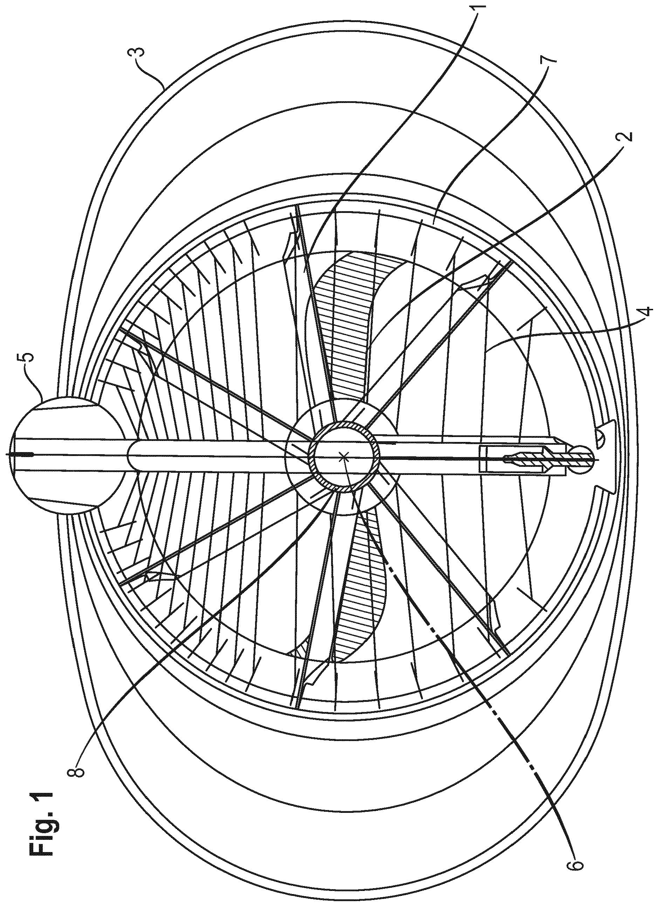

Fig. 1 zeigt eine Vorderansicht einer Ausführungsvariante mit beispielsweise sieben Leitschaufeln 1 mit einer Vorderkante 1a. Sie sind radial um eine Achse 6 angeordnet und erwachsen aus einem Sockelrohr 8. Sie umschließen die Einlaufkante 7 des Turbinenmantels 3 an ihrem äußeren Ende. An der Oberseite ist ein Schwimmkörper 5 zur Stabilisierung der Boje angebracht. Zusätzlich sind noch stromaufwärts der Leitschaufeln 1 Seile 4 rechenförmig angeordnet, um zum Ablenken von großem Treibgut beizutragen.

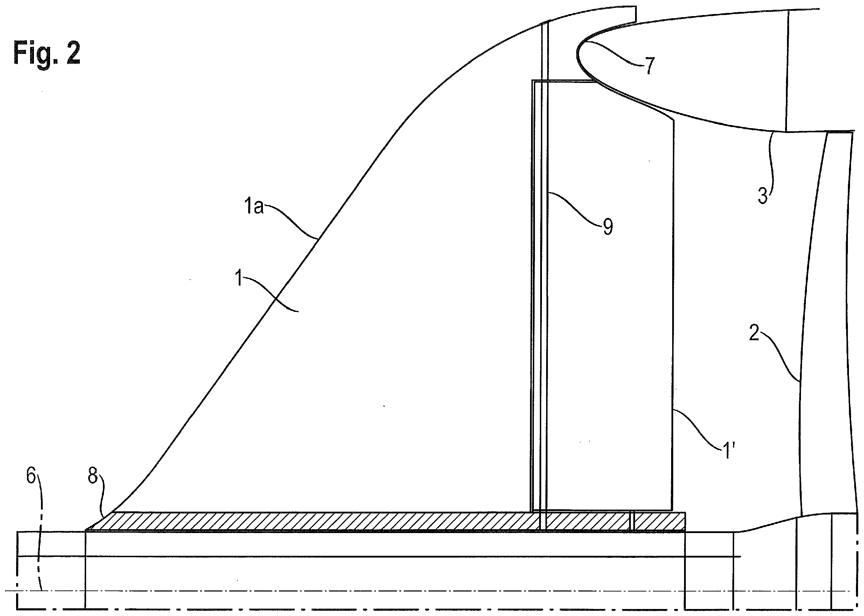

Fig. 2 zeigt einen Teil der gleichen Ausführungsvariante im Längsschnitt. Die Leitschaufel 1 befindet sich vor der Turbine 2 und erstreckt sich vom Zentralrohr 8, welches um die Achse 6 verläuft, zur Einlaufkante 7 des Turbinenmantels 3. Dort umschließt Leitschaufel 1 Einlaufkante 7. Die Leitschaufeln 1 besitzen einen Endabschnitt 1', der entlang einer Achse 9 schwenkbar ist.

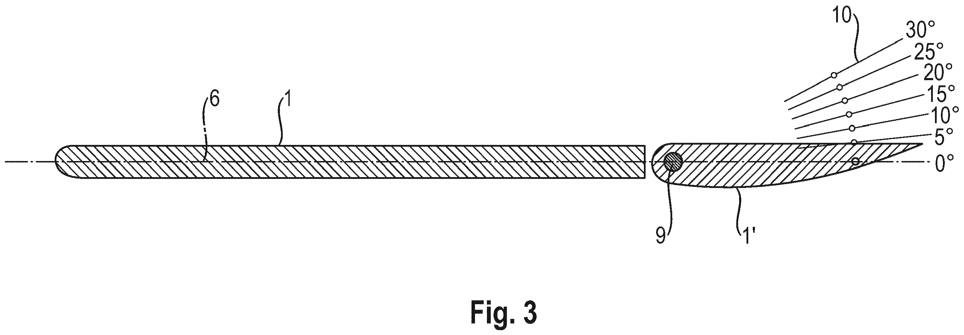

Fig. 3 zeigt eine Ansicht eines Leitapparats mit einer Leitschaufel 1, wie sie auch in Fig. 2 dargestellt ist. Der Endabschnitt 1' von Leitschaufel 1 ist um die Achse 9 schwenkbar, und in verschiedenen Winkeln (Beispielsstrahlen 10) gegenüber der Längsachse 6 einstellbar.

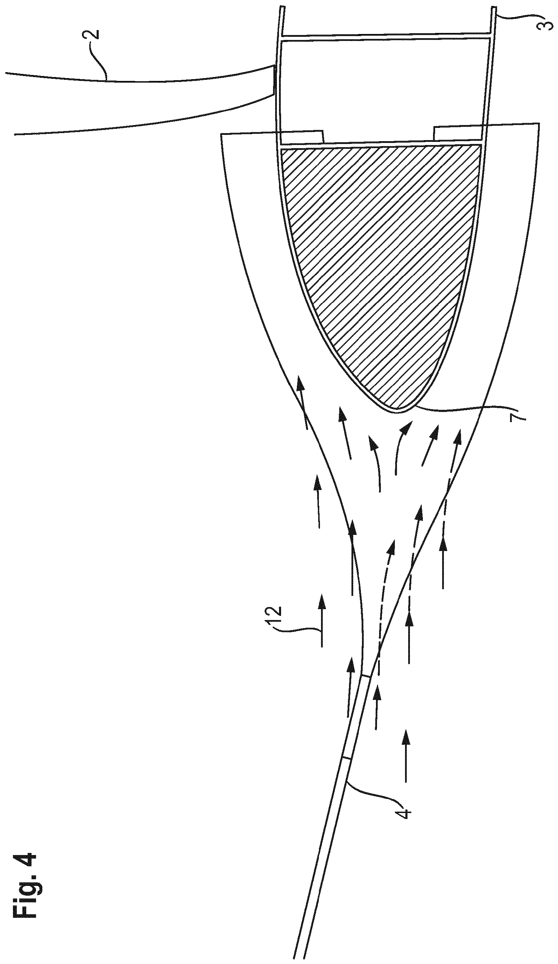

Fig. 4 zeigt eine treibgutabweisende, selbstreinigende Spannvorrichtung, mit der der Rechen, bestehend aus gespannten Seilen 4 an der Außenseite der Einlaufkante 7 fixiert und gespannt wird, deren Kanten zur Ablenkung des Treibguts sich weit über die Einlaufkante innen und außen erstrecken.

## Patentansprüche

1. Freistromturbine mit einem rohrförmigen Turbinenmantel, einer im Inneren des Turbinenmantels angeordneten Turbine (2), die einen Generator antreibt, wobei der Turbinenmantel (3) eine durch eine Einlaufkante (7) begrenzte Einströmöffnung, einen Einlauftrichter und einen Diffusor aufweist, wobei stromaufwärts der Einströmöffnung ein Leitapparat angebracht ist, der aus mehreren Leitschaufeln (1) besteht, die jeweils eine Vorderkante (1a) aufweisen, **dadurch gekennzeichnet, dass** sich die Vorderkanten (1a) der Leitschaufeln (1) im Wesentlichen entlang eines Kegelmantels von einer Spitze bis zur Einlaufkante (7) erstrecken, und dass die Leitschaufeln (1) an ihren stromabwärtigen Seiten einen angestellten Endabschnitt aufweisen.

2. Freistromturbine nach Anspruch 1, **dadurch gekennzeichnet, dass** sich die Vorderkanten der Leitschaufeln (1) jeweils außen über die Einlaufkante (7) hinweg erstrecken.

3. Freistromturbine nach Anspruch 1 oder 2, **dadurch gekennzeichnet, dass** die Leitschaufeln (1) in einem Winkel von maximal 60° vorzugsweise in einem Winkel zwischen 25° und 45° zu einer Längsachse (6) der Freistromturbine angeordnet sind.

4. Freistromturbine nach Anspruch 1 bis 3, **dadurch gekennzeichnet, dass** sich die Leitschaufeln (1) von einem Zentralrohr (8) radial nach außen erstrecken.

5. Freistromturbine nach Anspruch 1 bis 4, **dadurch gekennzeichnet, dass** der angestellte Endabschnitt der Leitschaufeln (1) einstellbar ausgeführt ist.

6. Freistromturbine nach Anspruch 1 bis 5, **dadurch gekennzeichnet, dass** der angestellte Endabschnitt der Leitschaufeln (1) zumindest teilweise stromabwärts der Einströmöffnung angeordnet ist.

7. Freistromturbine nach Anspruch 1 bis 6, **dadurch gekennzeichnet, dass** stromaufwärts der Leitschaufeln (1) ein treibgutabweisender, selbstreinigender Rechen in Form einer Mehrzahl von Seilen (4) angeordnet ist, die von einer Bugkante über die Einlaufkante (7) gespannt sind.

8. Freistromturbine nach Anspruch 7, **dadurch gekennzeichnet, dass** die Seile (4) zumindest zum Teil an der Außenseite der Einlaufkante (7) befestigt sind.

9. Freistromturbine nach Anspruch 8, **dadurch gekennzeichnet, dass** die Seile (4) an der Außenseite der Einlaufkante (7) mit Hilfe einer selbstreinigenden Spannvorrichtung befestigt sind.

## Claims

1. Free flow turbine having a tubular turbine shell, a turbine (2) which is arranged inside the turbine shell and drives a generator, wherein the turbine shell (3) has an inflow opening bounded by an inlet edge (7), an inlet funnel and a diffuser, wherein a guide apparatus is mounted upstream of the inflow opening, which consists of a plurality of guide vanes (1) which each have a leading edge (1a), **characterised in that** the leading edges (1a) of the guide vanes (1) extend substantially along a conical envelope from a tip to the inlet edge (7), and **in that** the guide vanes (1) have a pitched end section on their downstream sides.

2. Free flow turbine according to claim 1, **characterised in that** the leading edges of the guide vanes (1) each extend externally beyond the inlet edge (7).

3. Free flow turbine according to claim 1 or 2, **characterised in that** the guide vanes (1) are arranged at an angle of at most 60°, preferably at an angle between 25° and 45°, to a longitudinal axis (6) of the free flow turbine.

4. Free flow turbine according to claim 1 to 3, **characterised in that** the guide vanes (1) extend radially outwards from a central tube (8).

5. Free flow turbine according to claim 1 to 4, **characterised in that** the pitched end section of the guide vanes (1) is of adjustable design.

6. Free flow turbine according to claim 1 to 5, **characterised in that** the pitched end section of the guide vanes (1) is arranged at least partially downstream of the inflow opening.

7. Free flow turbine according to claim 1 to 6, **characterised in that** upstream of the guide vanes (1) there is arranged a flotsam-repelling, self-cleaning rake in the form of a plurality of cables (4) which are tensioned from a nose edge over the inlet edge (7).

8. Free flow turbine according to claim 7, **characterised in that** the cables (4) are fastened at least in part to the outside of the inlet edge (7).

9. Free flow turbine according to claim 8, **characterised in that** the cables (4) are fastened to the outside of the inlet edge (7) with the aid of a self-cleaning tensioning device.

## Revendications

1. Turbine à écoulement libre comprenant une enveloppe tubulaire, une turbine (2), montée à la partie interne de l'enveloppe de la turbine qui entraîne une génératrice, l'enveloppe (3) de la turbine comprenant une ouverture d'admission délimitée par un bord d'entrée (7), une trémie d'entrée, et un diffuseur, en amont de l'ouverture d'admission étant installé un appareil directeur qui est constitué par plusieurs aubes directrices (1) ayant chacune un bord avant (1a),
**caractérisée en ce que**
les bords avant (la) des aubes directrices (1) s'étendent essentiellement le long d'une enveloppe conique, d'une pointe au bord d'entrée (7), et les aubes directrices (1) comportent sur leurs côtés avals un segment d'extrémité incident.

2. Turbine à écoulement libre conforme à la revendication 1,
**caractérisée en ce que**
les bords avant des aubes directrices (1) s'étendent respectivement vers l'extérieur au-delà des bords d'entrée (7).

3. Turbine à écoulement libre conforme à la revendication 1 ou 2,
**caractérisée en ce que**
les aubes directrices (1) sont installées selon un angle d'au maximum 60°, de préférence compris entre 25° et 45°par rapport à l'axe longitudinal (6) de la turbine à écoulement libre.

4. Turbine à écoulement libre conforme à l'une des revendications 1 à 3,
**caractérisée en ce que**
les aubes directrices (1) s'étendent radialement vers l'extérieur à partir d'un tube central (8).

5. Turbine à écoulement libre conforme à l'une des revendications 1 à 4,
**caractérisée en ce que**
le segment d'extrémité incident des aubes directrices (1) est réglable.

6. Turbine à écoulement libre conforme à l'une des revendications 1 à 5,
**caractérisée en ce que**
le segment d'extrémité incident des aubes directrices (1) est monté au moins partiellement en aval de l'ouverture d'admission.

7. Turbine à écoulement libre conforme à l'une des revendications 1 à 6,
**caractérisée en ce qu'**
en amont des aubes directrices (1) est monté un dégrilleur autonettoyant repoussant les objets flottants réalisé sous la forme d'un ensemble de câbles (4) qui sont tendus sur le bord d'admission (7) par un bord avant.

8. Turbine à écoulement libre conforme à la revendication 7,
**caractérisée en ce que**
les câbles (4) sont fixés au moins en partie sur la face externe du bord d'admission (7).

9. Turbine à écoulement libre conforme à la revendication 8,
**caractérisée en ce que**
les câbles (4) sont fixés sur la face externe du bord d'admission (7) par l'intermédiaire d'un dispositif de tension autonettoyant.
